# EUROPEAN PATENT APPLICATION

(11) **EP 3 168 797 A1**
(43) Date of publication of application: **17.05.2017**
(21) Application number: 15194768.6
(22) Date of filing: 16.11.2015
(51) Int. Cl.: G06Q 10/06

(54) **METHOD FOR ENHANCED MANAGEMENT OF A PUBLIC UTILITY SYSTEM, THE PUBLIC UTILITY SYSTEM COMPRISING A PLURALITY OF OPERATING COMMUNICATION-ENABLED PUBLIC UTILITY DEVICES, PUBLIC UTILITY SYSTEM FOR ENHANCE MANAGEMENT, COMMUNICATION-ENABLED PUBLIC UTILITY DEVICE FOR AN ENHANCED MANAGEMENT OF A PUBLIC UTILITY SYSTEM, PROGRAM AND COMPUTER PROGRAM PRODUCT**

(71) Applicant: Deutsche Telekom AG, 53113 Bonn (DE)
(72) Inventor: Dianese, Gianluca, 50374 Erftstadt (DE)
(74) Representative: Schwöbel, Thilo K.

(57) **Abstract**

The invention relates to a method for enhanced management of a public utility system, the public utility system comprising a plurality of operating communication-enabled public utility devices, wherein the public utility system further comprises a communication means for communicating between the operating communication-enabled public utility devices as well as between at least one of the operating communication-enabled public utility devices and the communication means, wherein the public utility system comprises a system management layer that interfaces with a database entity, the database entity having a device-related record regarding each operating communication-enabled public utility device, wherein - regarding a new communication-enabled public utility device that is not yet operating as part of the public utility system - the method comprises the steps of:
-- in a first step, a communication involving the public utility system occurs regarding the new communication-enabled public utility device such that - regarding the new communication-enabled public utility device - the system management layer is contacted,
-- in a second step, subsequent to the first step, a device-related record regarding the new communication-enabled public utility device is generated or validated.

## Description

### BACKGROUND

The present invention relates to a method for enhanced management of a public utility system, the public utility system comprising a plurality of operating communication-enabled public utility devices, wherein the public utility system further comprises a communication means and a system management layer that interfaces with a database entity, the database entity having a device-related record regarding each operating communication-enabled public utility device.

Furthermore, the present invention relates to a public utility system for enhanced management, the public utility system comprising a plurality of operating communication-enabled public utility devices and a system management layer that interfaces with a database entity, the database entity having a device-related record regarding each operating communication-enabled public utility device.

Additionally, the present invention relates to a communication-enabled public utility device for enhanced management of a public utility system, the public utility system comprising a plurality of operating communication-enabled public utility devices, wherein the plurality of communication-enabled public utility devices are configured to communicating with other communication-enabled public utility devices as well as with the communication means, wherein the communication-enabled public utility devices are configured to correspond to a device-related record in a database entity of a system management layer of the public utility system.

Furthermore, the present invention relates to a program and to a computer program product for enhanced management of a public utility system according to the inventive method, the inventive public utility system and the inventive communication-enabled public utility device.

Data collection and monitoring as well as providing public services such as lighting in an urban environment can have a number of applications, e.g. including transportation, sensing environmentally relevant data, urban lighting and/or healthcare. In the context of the present invention, one aspect relates to urban lighting. The deployment of new public lighting devices or luminaries, especially LED-based luminaries, across urban and industrial spaces is seen as one of the fastest and most efficient ways to drastically reduce energy consumption and achieve the objectives of sustainable economical development. By means of using public lighting devices that can be flexibly used, it is possible to remotely control, monitor and operate the infrastructure, guaranteeing dynamical or extremely efficient programming patterns and predictive maintenance programs, able to reduce overall TCO (total cost of ownership) from 15% to 30% compared with the infrastructure costs related to corresponding traditional infrastructures. However, realizing this increased efficiency requires comparably large initial investment costs.

### SUMMARY

It is an object of the present invention to provide the possibility to efficiently build and operate a public utility system, i.e. a public utility system that is both able to integrate new or additional communication-enabled public utility devices in an easy and uncomplicated manner as well as can operate and maintain a plurality of communication-enabled public utility devices that potentially relate to different manufacturers and/or are based on different technologies, especially related to data transmission or communication to and from the communication-enabled public utility devices.

The object of the present invention is achieved by a method for enhanced management of a public utility system, the public utility system comprising a plurality of operating communication-enabled public utility devices, wherein the public utility system further comprises a communication means for communicating between the operating communication-enabled public utility devices as well as between at least one of the operating communication-enabled public utility devices and the communication means, wherein the public utility system comprises a system management layer that interfaces with a database entity, the database entity having a device-related record regarding each operating communication-enabled public utility device, wherein - regarding a new communication-enabled public utility device that is not yet operating as part of the public utility system - the method comprises the steps of:
-- in a first step, a communication involving the public utility system occurs regarding the new communication-enabled public utility device such that - regarding the new communication-enabled public utility device - the system management layer is contacted,
-- in a second step, subsequent to the first step, a device-related record regarding the new communication-enabled public utility device is generated or validated.

It is thereby advantageously possible according to the present invention that the complexity in handling different technological ecosystems of different communication-enabled public utility devices can be reduced, especially by means of a structured ICT approach. The approach according to the present invention is especially based on building interfaces between the four major layers (i.e. the communication-enabled public utility devices in the field (i.e. installed in a public or private area), data transport layer from the devices to the platform (i.e. the communication means to provide communication capacity between (at least a part of) the different communication-enabled public utility devices and/or between the communication-enabled public utility devices and the communication means), data management layer, and applications layer) in a dynamic and possibly self-learning way, i.e. according to the present invention it is advantageously possible that every time that a new standard interface or communication protocol is added to the network (or communication means of the public utility system), any device (of the communication-enabled public utility devices), leveraging on such a new standard interface, which could be connecting to it, should be recognized and requested to present its credentials for secure authentication and association to the network. Once this security screening provisioning process is completed, the new devices should be allowed to operate in the public utility system, following the standardized processes for that device category. The realization of the inventive method and public utility system advantageously provides the benefits as follows:
-- Devices, Sensors, Gateways, other hardware elements preferably connect to the platform (i.e. to the public utility system) in a number of ways, either via plug-ins (data throughput) and agents (onboard pre-processing) or at data level (e.g., via APIs (Application Programming Interface), preferably supporting an "open data" model in "smart cities" projects);
-- from the devices (or their databases), data are preferably transported to the servers (within the public utility system) using the different communication technologies of the communication means. The different communication modules are preferably commissioned and/or provisioned via a layer of the IOT platform, in order to assure that any aspect related to authentication, consumption, management, SLA (Service Level Agreement) is kept under control, providing a real time overview of the functioning of the ecosystem as a whole, in order to assure that the upper layers - such as the system management layer or the operation layer - are always receiving the data feeds necessary to operate on the use cases (e.g., street lighting applications) in full;
-- data are preferably processed in a data management layer or system management layer which preferably use sophisticated algorithms to create data models, data normalization patterns (preferably leveraging on open source engineering dictionaries able to assure reliable translation of the technical terms across different protocols, standards, communication and programming languages) and provide access to these processed data via standard APIs accessible through the upper layer;
-- an application layer, preferably guarantees, especially via restful APIs, that legacy and new applications are allowed to consume the data generated on the field, then transported and processed by the intermediate layers.

According to the present invention, a public utility system comprises a plurality of operating communication-enabled public utility devices. A communication means - typically a telecommunications network and especially in the form of a mobile communication network - provides the possibility for communicating both between the operating communication-enabled public utility devices as well as between at least one of the operating communication-enabled public utility devices and the communication means (or telecommunications network). According to an alternative embodiment of the present invention, only the possibility for communicating between at least one of the operating communication-enabled public utility devices and the communication means (or telecommunications network) is provided by the communication means, which is- in that case - typically a mobile communication network.

Furthermore according to the present invention, the public utility system comprises a system management layer that interfaces with a database entity. The database entity has a device-related record regarding each of the operating communication-enabled public utility device. According to the present invention and regarding a new communication-enabled public utility device (i.e. that is not yet operating as part of the public utility system), it is proposed that:
-- a communication involving the public utility system occurs regarding the new communication-enabled public utility device such that - regarding the new communication-enabled public utility device - the system management layer is contacted, and
-- a device-related record regarding the new communication-enabled public utility device is generated or validated.

Typically, the communication regarding the new communication-enabled public utility device is initiated involving the communication-enabled public utility device itself, i.e. an information is transmitted from the communication-enabled public utility device (to be integrated in the public utility system) to the system management layer of the public utility system.

According to the present invention it is preferred that the communication involving the public utility system of the first step comprises
-- providing a data transmission connectivity between the new communication-enabled public utility devices, at least in the direction from the communication-enabled public utility devices towards the public utility system, and
-- transmitting an initial message from the new communication-enabled public utility device and directed to the system management layer.

By means of transmitting the initial message from the new communication-enabled public utility device towards the public utility system and especially to the system management layer, using a data transmission connectivity of the new communication-enabled public utility device, it is advantageously possible that the integration of the new communication-enabled public utility device can be realized in an easy and smooth manner. Thereby, it is, e.g., possible to transmit a serial number or identification information of the new communication-enabled public utility device towards the public utility system and especially to the system management layer. Thereby, the new communication-enabled public utility device is able to be identified unambiguously by the public utility system, and the error rate or the probability of a database mismatch can be greatly reduced.

According to a further preferred embodiment of the present invention the method comprises a third step, prior to the second step or prior to the first step, the third step comprising storing initial device-related information in the database entity, the initial device-related information being related to at least the new communication-enabled public utility device but preferably being related to a plurality of further new or further operational communication-enabled public utility devices, and the initial device-related information comprising at least one first authentication-related piece of information such that an authentication of at least the new communication-enabled public utility device is able to be performed by means of the at least one first authentication-related piece of information.

By means of storing, in a third step, initial device-related information in the database entity, the initial device-related information comprising at least one first authentication-related piece of information, it is advantageously possible according to the present invention that the integration of new communication-enabled public utility device can be provided in a protected manner, i.e. protected by the first authentication-related piece of information. Advantageously, the first authentication-related piece of information is able to be stored in the database entity after the purchase of the new communication-enabled public utility device (or plurality of communication-enabled public utility devices) is conducted but prior to actually integrating the new communication-enabled public utility device (or plurality of communication-enabled public utility devices) into the public utility system. According to a preferred embodiment of the invention, the authentication-related piece of information is specific for each new communication-enabled public utility device (i.e. the authentication-related piece of information is different for each device). Alternatively, the authentication-related piece of information is not specific for each new communication-enabled public utility device but, e.g., common (i.e. identical) for a group or a plurality of communication-enabled public utility devices that related to one purchase process or that relate to one tender process. It is especially preferred according to a further embodiment of the present invention that the authentication-related piece of information comprises both a part that is common to a plurality of different new communication-enabled public utility devices, and an information relating to a counter (or a counter information) wherein for each additional new communication-enabled public utility device (of the plurality of different new communication-enabled public utility devices) that is integrated into the public utility system the counter information is modified (e.g. decreased) in order to match the number of devices involved in the purchase process with the number of devices actually integrated into the public utility system.

According to a further preferred embodiment of the present invention, during the first step, the initial message, transmitted by the new communication-enabled public utility device to the system management layer, comprises a second authentication-related piece of information, the second authentication-related piece of information being either specific to the new communication-enabled public utility device or being specific to a plurality of communication-enabled public utility devices comprising the new communication-enabled public utility device.

By means of the initial message comprising a second authentication-related piece of information, it is advantageously possible that the integration of the new communication-enabled public utility device into the public utility system is secured by a strong authentication level.

According to a further embodiment of the present invention, it is also preferred that, in the second step, the generation or validation of the device-related record regarding the new communication-enabled public utility device comprises authenticating the new communication-enabled public utility device based on the first authentication-related piece of information and based on the second authentication-related piece of information.

Thereby, it is advantageously possible that misuse of the public utility system can be efficiently avoided.

According to the present invention it is furthermore preferred that the first authentication-related piece of information corresponds to a list of assets of the public utility system, wherein the list of assets is preferably stored in an accounting and/or asset management system corresponding to the public utility system.

Thereby, it is advantageously possible according to the present invention that the different communication-enabled public utility devices of the public utility system can be easily tracked, even though the communication-enabled public utility devices belong to different types of devices, e.g. using different communication interfaces and/or access technologies.

According to the present invention it is furthermore preferred that by means of the system management layer the data transport and the data management is decoupled from the management of the communication-enabled public utility devices.

By means of decoupling the data transport and the data management, it is advantageously possible to unify and automate the network management interfaces and allows to commission, authenticate and interface devices from a unified control center.

According to the present invention it is furthermore preferred that the public utility system correspond, at least inter alia, to an intelligent lighting system, and wherein the communication-enabled public utility devices correspond to intelligent lighting devices, especially providing illumination to a street or to a premises served by the intelligent lighting system.

It is thereby advantageously possible according to the present invention that intelligent public utility systems can be easily provided.

According to a further preferred embodiment of the present invention, the communication-enabled public utility devices comprises sensor means, especially light sensor means, and/or devices having processing capabilities, especially as processing capabilities as light control and/or traffic light control and/or video cameras that are able to do analytics, and/or camera devices and/or infra-red sensor means, wherein the method comprises the step of transmitting sensor readings to the system management layer.

By means of the communication-enabled public utility devices comprising sensor means, it is advantageously possible to provide additional functions and/or public services by means of the inventive method and inventive public utility system.

Furthermore, the present invention relates to a public utility system for enhanced management, the public utility system comprising a plurality of operating communication-enabled public utility devices, wherein the public utility system further comprises a communication means for communicating between the operating communication-enabled public utility devices as well as between at least one of the operating communication-enabled public utility devices and the communication means, wherein the public utility system comprises a system management layer that interfaces with a database entity, the database entity having a device-related record regarding each operating communication-enabled public utility device, wherein - regarding a new communication-enabled public utility device that is not yet operating as part of the public utility system - the public utility system is configured such that:
-- a communication involving the public utility system occurs regarding the new communication-enabled public utility device such that - regarding the new communication-enabled public utility device - the system management layer is contacted,
-- a device-related record regarding the new communication-enabled public utility device is generated or validated.

Thereby, it is advantageously possible to provide a public utility system that provides the advantages of the inventive method.

Furthermore, the present invention relates to a communication-enabled public utility device for enhanced management of a public utility system, the public utility system comprising a plurality of operating communication-enabled public utility devices, wherein the plurality of communication-enabled public utility devices are configured to communicating with other communication-enabled public utility devices as well as with the communication means, wherein the communication-enabled public utility device is configured to correspond to a device-related record in a database entity of a system management layer of the public utility system, wherein - regarding a new communication-enabled public utility device that is not yet operating as part of the public utility system - the communication-enabled public utility device is configured such that:
-- a communication regarding the new communication-enabled public utility device occurs, involving the public utility system, such that - regarding the new communication-enabled public utility device - the system management layer is contacted,
-- regarding the new communication-enabled public utility device, a device-related record is generated or validated.

Additionally, the present invention relates to a program comprising a computer readable program code which, when executed on a computer or on a component of a public utility system or on a communication-enabled public utility device or on a network component of a communication means of a public utility system or in part on a component of public utility system and/or in part on a communication-enabled public utility device and/or in part on a network component of a communication means of a public utility system, causes the computer and/or the component of the public utility system and/or the communication-enabled public utility device and/or the network component of the communication means of the public utility system to perform the inventive method.

Still additionally, the present invention relates to a computer program product for enhanced management of a public utility system, the computer program product comprising a computer program stored on a storage medium, the computer program comprising program code which, when executed on a computer or on a component of a public utility system or on a communication-enabled public utility device or on a network component of a communication means of a public utility system or in part on a component of public utility system and/or in part on a communication-enabled public utility device and/or in part on a network component of a communication means of a public utility system, causes the computer and/or the component of the public utility system and/or the communication-enabled public utility device and/or the network component of the communication means of the public utility system to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrate a public utility system, comprising a plurality of operational communication-enabled public utility devices as well as a plurality of new communication-enabled public utility devices, and a communication means in the form of a mobile communication network, the mobile communication network comprising a radio cell being served by a base station entity.
**Figure 2** schematically illustrates another representation of the public utility system according to the present invention, the public utility system comprising a system management layer, a database entity, an operation layer as well as the communication means.
**Figure 3** schematically illustrates a communication diagram related to integrating a new communication-enabled public utility device into the public utility system according to an embodiment of the present invention and especially according to the inventive method.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

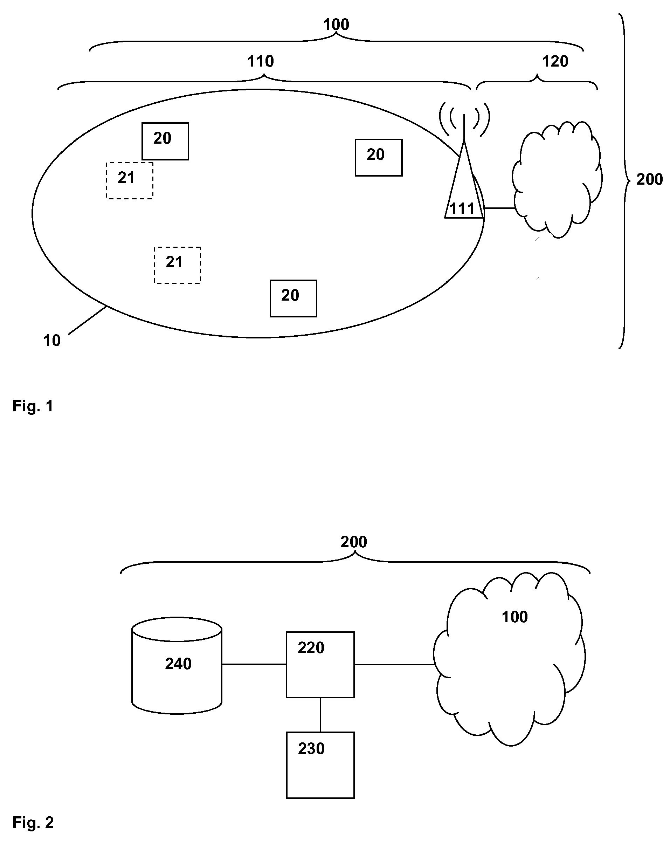

In **Figure 1**, a public utility system 200, comprising a plurality of operational communication-enabled public utility devices 20 as well as a plurality of new communication-enabled public utility devices 21, and a communication means 100 in the form of a mobile communication network 100, the mobile communication network 100 comprising a radio cell 10 being served by a base station entity 111. In the exemplary embodiment of the communication means 100 as a mobile communication network 100 shown in Figure 1, the mobile communication network 100 comprises an access network 110 and a core network 120. The core network 120 is only schematically shown by means of a cloud representation. The public land mobile network 100 (especially the core network 120) comprises typically various network elements such as an MSC (Mobile Switching Center), a SGSN (Serving GPRS Support Node), a MME (Mobility Management Entity), preferably a plurality of network elements thereof. The mobile communication network 100 is preferably a cellular telecommunications network comprising typically a plurality of network radio cells, one of which is represented in Figure 1. The base station entity 111 is typically a base station, e.g. a NodeB or an eNodeB base transceiver station. The mobile communication network 100 is configured to provide - in the exemplary situation represented in Figure 1 - the functionality of the communication means 100 according to the present invention.

Alternatively and likewise according to the present invention, the communication means 100 can be provided (instead of by a mobile communication network and/or in addition to a mobile communication network), e.g., by a Bluetooth ad hoc network, or a communication network (linking at least part of the operating and/or new communication-enabled public utility devices 20, 21) according to a different communication standard or access technology.

The public utility system 200 according to the present invention is also represented in **Figure 2**, which shows another representation of the public utility system 200 according to the present invention, the public utility system 200 comprising a system management layer 220, a database entity 240, an operation layer 230 as well as the communication means 100. In the exemplary embodiment represented in Figure 2, the database entity 240 is connected to the system management layer 220. Furthermore, the system management layer 220 is connected to the operation layer 230 (or operation entity 230). Additionally, the system management layer 220 is connected to the communication means 100. According to an alternative embodiment (not represented in Figure 2) - in addition to the system management layer 220 being connected to the database entity 240, the operation layer 230, and the communication means 100 - the operation layer 230 is additionally also connected to the database entity 240. In this respect (i.e. for both of these mentioned alternative embodiments), the term connected means that either a logical (perhaps indirect) communication link or a direct physical communication link either is (more or less constantly) existent or is able to be created or initiated (upon request by at least one of the components or entities connected via the respective communication link).

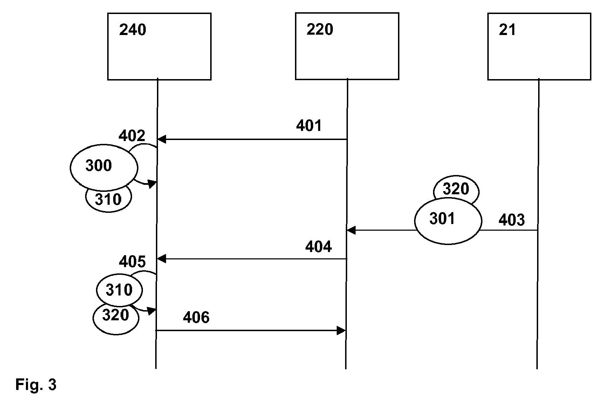

In **Figure 3**, a communication diagram related to integrating a new communication-enabled public utility device 21 into the public utility system 200 according to an embodiment of the present invention and especially according to the inventive method is schematically shown.

According to the inventive method of the present invention, a new communication-enabled public utility device 21 is integrated in the public utility system 200 (or is added to the public utility system 200) by means of the following steps:
-- in a first step, a communication involving the public utility system 200 occurs regarding the new communication-enabled public utility device 21 such that - regarding the new communication-enabled public utility device 21 - the system management layer 220 is contacted,
-- in a second step, subsequent to the first step, a device-related record regarding the new communication-enabled public utility device is generated or validated.

Especially and according to a preferred embodiment of the present invention, an initial device-related information 300 (being related to at least the new communication-enabled public utility device 21 but preferably being related to a plurality of further new or further operational communication-enabled public utility devices 20, 21) is stored in the database entity 240 prior to the second step or also prior to the first step. The initial device-related information 300 comprises at least one first authentication-related piece of information 310 such that an authentication of at least the new communication-enabled public utility device 21 is able to be performed by means of the at least one first authentication-related piece of information 310. Typically, the initial device-related information 300 is transmitted by the system management layer 220 to the database entity 240 in a first processing step 401. In a second processing step 402, the initial device-related information 300 and the at least one first authentication-related piece of information 310 is stored in the database entity 240. In a third processing step 403, the new communication-enabled public utility device 21 transmits an initial message 301 to the system management layer 220, the initial message 301 especially comprising a second authentication-related piece of information 320. In a fourth processing step 404, the initial message 301 or at least the information content of the initial message 301 or a part of that information content (but typically including at least the second authentication-related piece of information 320) is transmitted from the system management layer 220 to the database entity 240 of the public utility system 200. In a fifth processing step 405, the first authentication-related piece of information 310 and the second authentication-related piece of information 320 are processed - especially compared or a cryptographic operation performed on at least part thereof- by the public utility system 200, especially involving a data processing device or entity of the public utility system 220 such as a network node, such that in thus performing the second step, the generation or validation of the device-related record regarding the new communication-enabled public utility device 21 is conducted (based on the first authentication-related piece of information 310 and based on the second authentication-related piece of information 320. In a sixth processing step 406, the result of such processing (performed during the fifth processing step 405) is transmitted to the system management layer 220, especially in case that the generation or validation of the device-related record has been successful.

The inventive public utility system and the inventive method is especially related to providing intelligent public services, especially intelligent lighting, and especially in public and/or private spaces. Intelligent lighting controls (the processors usually being integrated in LED fixtures, in order to allow them to be remotely operated individually, or in clusters) are usually equipped with connectivity modules using one (or a plurality) of the main communication protocols (2G/3G/4G/5G (i.e. mobile communication networks of the second and/or third and/or fourth and/or fifth generation), Zigbee, Bluetooth, 6lowpan, Wi-Fi, over the power-line communication, etc.). Therefore, such lighting controls correspond to communication-enabled public utility devices 20, 21 according to the present invention. Such intelligent lighting controls or communication-enabled public utility devices 20, 21 can be utilized with different lighting technologies (LED, Low Pressure/High pressure sodium, etc.) and are supposed to leverage on the specific technology specifications to support their management processes. This means that, in case the lighting technology can only be switched "on" or "off" and monitored for consumption and other parameters like heat, electrical loads, etc. (metering functionalities), the lighting control will support these operations and will be used/operated via a user interface design for supporting those functionalities. In case the lighting control refers and interacts with other lighting technologies, LED luminaries as an example, it is possible according to the present invention to perform more operations on them, like "almost real time" switch on/off, dynamic steering via motion sensors, advanced dimming, etc. Furthermore according to the present invention, all these operations are especially possible on a one to one relationship, i.e. typically with each single lamp (or LED luminary) in the network.

According to the present invention, a solution is provided for the situation that, in wider urban public and/or private and/or industrial areas, such different technologies coexist, leading to an increased complexity in the management of these processes in a public utility system. According to the present invention, such a situation - with a plurality of different technologies of the communication-enabled public utility devices 20, 21 - can be handled in an harmonized manner, avoiding the need of interacting with each different segment of the infrastructure via different applications and avoiding the need of providing, and especially maintaining, a multitude of different interfaces capable of interacting with different, perhaps partly also proprietary interfaces. It is especially advantageous according to the present invention, that a multitude of communication protocols and standards are able to be integrated in an inventive public utility system and corresponding method, also supporting multi-vendor environment (e.g. derived from or being the result of a number of subsequent tenders), deploying in legacy and new lighting infrastructures, complex combinations of these different lighting technologies and communication protocols.

According to an embodiment of the present invention, the public utility system 200 comprises, on its lowest layer, the communication-enabled public utility devices 20, 21, especially luminaries and/or sensors and/or other devices. On a superior layer, a data transport layer is provided. Furthermore on a superior layer, a data management layer is provided. On the top layer of the public utility system 200, an application layer is provided.

According to the present invention, the different communication networks, device types (i.e. of the communication-enabled public utility devices 20, 21) and infrastructures are enabled to interwork such that the different interfaces are wrapped in an enabling layer (especially the system management layer 220) and are allowed to be operated and controlled by applications (within the application layer of the public utility system 200).

According to the present invention, the public utility system 200 is advantageously used in an intelligent mode in the sense that the commissioning and provisioning tools are self-aware and are able to recognize when new devices (i.e. communication-enabled public utility devices 20, 21), even of different categories (such as, e.g., parking sensors, waste management sensors, traffic flow sensors, environmental sensors, condition monitoring sensors, etc.), become available and can be associated to the public utility system 200, if properly authenticated. According to the present invention, a fully self-configuring and self-healing mesh network is able to be deployed on the basis of an infrastructure based on the relationship between different communication-enabled public utility devices 20, 21, containing a multitude of connectivity modules (nodes) and a gateway, thus able to transfer data to and from the cloud or other parts of the telecommunications network (or the public utility system 200). Once one of these networks is deployed to control, e.g., street lighting, it is possible to add additional nodes, using the same technology, to control waste management bins or smart meters, leveraging on the existing mesh network. Accordingly, it is advantageously possible to integrate additional (in some case legacy, like GSM or WiFi) networks into, e.g., street lighting infrastructure and the communication network to support it, or build new networks out of the existing infrastructure, in the same enabling ecosystem. Once this is achieved, the "owner"/"operator" of the "intelligent street lighting network" is able to leverage on it to support also other devices and/or networks necessary to support the infrastructure to deploy other use cases beyond lighting and energy efficiency. A similar approach is implemented on the basis of some of ultra-narrowband/ultra-low-power network technologies, like LORA, Sigfox or Neul. In this case, according to an embodiment of the present invention, a gateway deployed on the field is covering an area of several square km, allowing devices using, e.g., a LORA powered module to connect to the network of the public utility system 200, if properly authenticated.

According to the present invention, the data transport layer (i.e. the communication) and the data management layer are decoupled from the devices (i.e. the communication-enabled public utility devices 20, 21) and the applications. In this respect, the decoupling of the respective layers especially means to interpose a network management layer (such as an Intelligent Street Lighting Network platform), which unifies and automates the network management interfaces and allows to commission, authenticate and interface devices from a unified control center. Such a unified control center abstracts the different networks management layers, in order to guarantee that the geographical area within which they are operating, can be homogenously operated by the entity responsible for the "territory" (either directly or via a "provider", an Intelligent Street Lighting Network management entity) and expanded when the need of additional devices (e.g., smart parking sensors) or supporting networks (e.g., 6lowpan based waste management bins and/or LORA based environmental sensors) arises. When doing this, the integration of the communication and data management layer becomes a self-cognitive and learning enabler of IOT (Internet of Things) applications, based on the use of open standards to be able to cope with the complexity of multiple vendors / multiple devices environment, for which it is necessary to guarantee a simple interoperable platform for connectivity and applications plug-ins.

According to the present invention, the Intelligent Street Lighting Network platform, operates interfacing the network management systems of the different communication technologies and interacts/communicates with them to jointly create the list of authorized devices (or communication-enabled public utility devices 20, 21) allowed to connect and operate via the network and inject data into the data management layers. This interaction is built and activated the first time that a new or legacy network is interfaced towards the Intelligent Street Lighting Network platform (i.e. the public utility system 200) and, from that moment on, the platform itself instructs the single network management system to activate those devices which are identified as part of the list of assets of the Intelligent Street Lighting Network (i.e. the public utility system 200). Such authentication processes is built and based on a number of factors/assumptions:
-- In these environments (mainly services of public utility, but also extended industrial environments), the addition of new devices/network components are announced or the entity managing the Intelligent Street Lighting Network (i.e. the system management layer 220) knows that a tender procedure has officially identified the need to add additional elements, i.e. communication-enabled public utility devices 20, 21, to the network (or networks);
-- Such new additional elements (i.e. new communication-enabled public utility devices 21) are advantageously listed in an accounting / asset management tool of the public utility system 200 and from here it is advantageously possible to clearly identify their credentials (such as MAC addresses (Media Access Control addresses), unique identifiers, authorization codes, etc.);
-- The authentication process, depending on the network vendor policy or network management system processes, is either initiated with instructions from the Intelligent Street Lighting Network platform to the single network management system, or directly from the Intelligent Street Lighting network platform, if able/allowed by the network vendor to gain direct control of the network architecture (gateways, nodes, etc.);
-- Any device (or communication-enabled public utility device 20, 21), even if authorized to connect to the single network, is not authorized to penetrate the data management layer and become part of the Intelligent Street Lighting network, if it is not listed in the asset management database (i.e. the database entity 240) of the platform (i.e. the public utility system 200).
-- Once one device category, using a specific communication protocol or a standard interface is connected to the platform for the first time, all other devices of the same category and using the same protocols or interfaces are automatically connected to the platform and need just to be authenticated (e.g. by means of a match between the list of new devices and the asset database in the platform) and authorized to communicate over the network or networks and/or to provide data (or consume data) from the data management layer.

According to the present invention, the result of the integration of communication and data management, provides the possibility of a platform that is able to support the commissioning of devices (contract activation of communication-enabled public utility devices), keeping track of data consumption, monitoring the SLAs (Service Level Agreements) related to the underlying contracts and granting access to the unified database (i.e. the database entity 240), via its adapters, to the applications authorized to use its APIs (Application Programming Interfaces) and proxies (acting like a "data broker", between the raw data owner and the application developer/user).

According to the present invention, communication-enabled public utility devices, on-boarded in the platform, are preferably subjected to authentication, activation, de-activation and, from the platform (or from the public utility system 200), it is preferably possible also to control them (device & asset management), in order to instruct them, for instance, on how frequently to report to the network (either directly or via dedicated applications connected to the platform via APIs). Furthermore, it is preferred that the platform is then able, e.g. via a normalization layer, to integrate the data collected from the different categories of devices in the field and provide, to the application developers/users, an enriched and extremely valuable amount of information usable to increase effectiveness of the applications and efficiency of the processes they are intended to support.

According to the present invention, it is advantageously possible that the value of such clusters of information increase in parallel with the increasing number of different devices (i.e. communication-enabled public utility devices 20, 21) in the field, with the diversity contributing to enrich the amount of data used to process the information itself. As an example, in case smart parking sensors (as an embodiment of communication-enabled public utility devices 20, 21) are recording the temperature of the environment at road level, this information could be enriched by measuring the temperature at 6 or 7 meters height (i.e. from LED luminaries), in order to evaluate, for the same (or very similar) geographical coordinates, the possible impact of environmental agents (transportation or heating pollution) on the quality of air in urban or industrial environments.

## Claims

1. Method for enhanced management of a public utility system (200), the public utility system (200) comprising a plurality of operating communication-enabled public utility devices (20), wherein the public utility system (200) further comprises a communication means (100) for communicating between the operating communication-enabled public utility devices (20) as well as between at least one of the operating communication-enabled public utility devices (20) and the communication means (100), wherein the public utility system (200) comprises a system management layer (220) that interfaces with a database entity (240), the database entity (240) having a device-related record regarding each operating communication-enabled public utility device (20), wherein - regarding a new communication-enabled public utility device (21) that is not yet operating as part of the public utility system (200) - the method comprises the steps of:
-- in a first step, a communication involving the public utility system (200) occurs regarding the new communication-enabled public utility device (21) such that - regarding the new communication-enabled public utility device (21) - the system management layer (220) is contacted,
-- in a second step, subsequent to the first step, a device-related record regarding the new communication-enabled public utility device (21) is generated or validated.

2. Method according to claim 1, wherein the communication involving the public utility system (200) of the first step comprises
-- providing a data transmission connectivity between the new communication-enabled public utility devices (21), at least in the direction from the communication-enabled public utility devices (21) towards the public utility system (200), and
-- transmitting an initial message (301) from the new communication-enabled public utility device (21) and directed to the system management layer (220).

3. Method according to one of the preceding claims, wherein the method comprises a third step, prior to the second step or prior to the first step, the third step comprising storing initial device-related information (300) in the database entity (240), the initial device-related information (300) being related to at least the new communication-enabled public utility device (21) but preferably being related to a plurality of further new or further operational communication-enabled public utility devices, and the initial device-related information (300) comprising at least one first authentication-related piece of information (310) such that an authentication of at least the new communication-enabled public utility device (21) is able to be performed by means of the at least one first authentication-related piece of information (310).

4. Method according to one of the preceding claims, wherein, during the first step, the initial message (301), transmitted by the new communication-enabled public utility device (21) to the system management layer (220), comprises a second authentication-related piece of information (320), the second authentication-related piece of information (320) being either specific to the new communication-enabled public utility device (21) or being specific to a plurality of communication-enabled public utility devices comprising the new communication-enabled public utility device (21).

5. Method according to one of the preceding claims, wherein, in the second step, the generation or validation of the device-related record regarding the new communication-enabled public utility device (21) comprises authenticating the new communication-enabled public utility device (21) based on the first authentication-related piece of information (310) and based on the second authentication-related piece of information (320).

6. Method according to one of the preceding claims, wherein the first authentication-related piece of information (310) corresponds to a list of assets of the public utility system (200), wherein the list of assets is preferably stored in an accounting and/or asset management system corresponding to the public utility system (200).

7. Method according to one of the preceding claims, wherein by means of the system management layer (220) the data transport and the data management is decoupled from the management of the communication-enabled public utility devices (20)

8. Method according to one of the preceding claims, wherein the public utility system (200) correspond, at least inter alia, to an intelligent lighting system, and wherein the communication-enabled public utility devices (20) correspond to intelligent lighting devices, especially providing illumination to a street or to a premises served by the intelligent lighting system.

9. Method according to one of the preceding claims, wherein the communication-enabled public utility devices (20) comprises sensor means, especially light sensor means, and/or devices having processing capabilities, especially as processing capabilities as light control and/or traffic light control and/or video cameras that are able to do analytics, and/or camera devices and/or infra-red sensor means, wherein the method comprises the step of transmitting sensor readings to the system management layer (220).

10. Public utility system (200) for enhanced management, the public utility system (200) comprising a plurality of operating communication-enabled public utility devices (20), wherein the public utility system (200) further comprises a communication means (100) for communicating between the operating communication-enabled public utility devices (20) as well as between at least one of the operating communication-enabled public utility devices (20) and the communication means (100), wherein the public utility system (200) comprises a system management layer (220) that interfaces with a database entity (240), the database entity (240) having a device-related record regarding each operating communication-enabled public utility device (20), wherein - regarding a new communication-enabled public utility device (21) that is not yet operating as part of the public utility system (200) - the public utility system (200) is configured such that:
-- a communication involving the public utility system (200) occurs regarding the new communication-enabled public utility device (21) such that - regarding the new communication-enabled public utility device (21) - the system management layer (220) is contacted,
-- a device-related record regarding the new communication-enabled public utility device (21) is generated or validated.

11. Communication-enabled public utility device (20, 21) for enhanced management of a public utility system (200), the public utility system (200) comprising a plurality of operating communication-enabled public utility devices (20), wherein the communication-enabled public utility device (20) is configured to communicating with other communication-enabled public utility devices (20) as well as with the communication means (100), wherein the communication-enabled public utility device (20) is configured to correspond to a device-related record in a database entity (240) of a system management layer (220) of the public utility system (200), wherein - regarding a new communication-enabled public utility device (21) that is not yet operating as part of the public utility system (200) - the communication-enabled public utility device (20, 21) is configured such that:
-- a communication regarding the new communication-enabled public utility device (21) occurs, involving the public utility system (200), such that - regarding the new communication-enabled public utility device (21) - the system management layer (220) is contacted,
-- regarding the new communication-enabled public utility device (21), a device-related record is generated or validated.

12. Program comprising a computer readable program code which, when executed on a computer or on a component of a public utility system (200) or on a communication-enabled public utility device (20) or on a network component of a communication means (100) of a public utility system (200) or in part on a component of public utility system (200) and/or in part on a communication-enabled public utility device (20) and/or in part on a network component of a communication means (100) of a public utility system (200), causes the computer and/or the component of the public utility system (200) and/or the communication-enabled public utility device (20) and/or the network component of the communication means (100) of the public utility system (200) to perform a method according to one of claims 1 to 9.

13. Computer program product for enhanced management of a public utility system (200), the computer program product comprising a computer program stored on a storage medium, the computer program comprising program code which, when executed on a computer or on a component of a public utility system (200) or on a communication-enabled public utility device (20) or on a network component of a communication means (100) of a public utility system (200) or in part on a component of public utility system (200) and/or in part on a communication-enabled public utility device (20) and/or in part on a network component of a communication means (100) of a public utility system (200), causes the computer and/or the component of the public utility system (200) and/or the communication-enabled public utility device (20) and/or the network component of the communication means (100) of the public utility system (200) to perform a method according to one of claims 1 to 9.
